(19) Europäisches Patentamt
European Patent Office
Office européen des brevets

(11) **EP 1 577 055 B1**

(12) **EUROPÄISCHE PATENTSCHRIFT**

(45) Veröffentlichungstag und Bekanntmachung des Hinweises auf die Patenterteilung:
**11.07.2007 Patentblatt 2007/28**

(51) Int Cl.:
***B24B 3/06*** *(2006.01)*   ***B24B 51/00*** *(2006.01)*
***B23C 5/10*** *(2006.01)*

(21) Anmeldenummer: **04030949.4**

(22) Anmeldetag: **29.12.2004**

(54) **Schleifeinrichtung und Verfahren zur Erzeugung einer Konturspanfläche mit variablem Axialspanwinkel**

Grinding device and process for generating a rake face with a variable axial chip angle

Dispositif de meulage et procédé de génération d'une surface d'enlèvement de rateau contourée avec un angle d'enlèvement variable

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **15.03.2004 DE 102004012742**

(43) Veröffentlichungstag der Anmeldung:
**21.09.2005 Patentblatt 2005/38**

(73) Patentinhaber: **Walter Maschinenbau GmbH 72072 Tübingen (DE)**

(72) Erfinder:
• **Dilger, Christian**
  **70771 Leinfelden-Echterdingen (DE)**
• **Simakov, Mikhail, Dr.**
  **Brighton Vic 3186 (AU)**

(74) Vertreter: **Rüger, Barthelt & Abel Patentanwälte**
**Postfach 10 04 61**
**73704 Esslingen a.N. (DE)**

(56) Entgegenhaltungen:
**EP-A- 1 348 508**      **EP-A- 1 389 502**
**WO-A-03/101654**      **US-A- 3 279 034**
**US-A- 4 619 079**      **US-A- 4 699 549**
**US-A- 5 662 514**

• **PATENT ABSTRACTS OF JAPAN Bd. 009, Nr. 172 (M-397), 17. Juli 1985 (1985-07-17) -& JP 60 044260 A (MITSUBISHI JUKOGYO KK), 9. März 1985 (1985-03-09)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Schleifeinrichtung, ein Schleifprogramm, einen Datenträger mit einem entsprechenden Schleifprogramm sowie ein Verfahren zur Erzeugung einer Konturspanfläche mit variablem Axialspanwinkel.

Fräswerkzeuge, die sowohl Stirnschneiden als auch Eckschneiden sowie Umfangsschneidkanten aufweisen, sind an den Umfangsschneidkanten in der Regel mit Axialspanwinkeln versehen, die von den Axialspanwinkeln der Stirnschneidkanten abweichen. Dies gilt insbesondere bei Fräswerkzeugen mit schraubenförmigen Umfangsspanräumen, insbesondere wenn diese einen großen Spiralwinkel, d.h. einen niedrigen Steigungswinkel ausweisen. (Der Spiralwinkel und der Steigungswinkel ergänzen sich zu 90°). Würden sich solche Spanräume bis zu den Stirnschneidkanten fortsetzen entstünden fragile Ecken, die instabil sind. Wird im Bereich der zwischen Stirnachneidkante und Umfangsschneidkante liegenden Eckschneidkante ein Axialspanwinkel gewählt, der zwischen dem der Stirnschneidkante und dem der Umfangskante liegt, ist die Form der Eckenschneidkante nicht ideal. Wird der Axialspanwinkel der Stirnscheidkante hingegen auch im Eckenbereich vorgesehen können wiederum Ausbrüche im Bereich der Eckenschneidkante die Folge sein. Diese ergeben sich aufgrund der sich durch unterschiedliche Spiralwinkel des Stirnspanraums sowie des Umfengsspanraums ergebenden Ecke.

US 5 662 514 offenbart eine Vorrichtung und ein Verfahren zur Herstellung von Zerspanungswerkzeugen gemäß dem Oberbegriff der Patentansprüche 1, 7 bzw. 16. An Rohlingen werden mittels einer CNC-Schleifmaschine in ausgewählten Winkelbeziehungen mehrere Span- und Freiflächenbereiche ausgebildet. Eine Vielzahl derartiger Schneidwerkzeuge wird zu einem Fräskopf zum Wälzfräsen von Kegelrädern zusammengesetzt.

JP 60 044260 offenbart eine Vorrichtung zum Schleifen einer Spanfläche an einem abgerundeten Bereich eines Schaftfräsers.

Davon ausgehend ist es Aufgabe der Erfindung, ein Schleifverfahren, eine Schleifeinrichtung sowie ein Schleifprogramm anzugeben, mit dem sich verbesserte Fräswerkzeuge schaffen lassen.

Diese Aufgabe wird durch die Schleifeinrichtung nach Anspruch 1, das Schleifprogramm nach Anspruch 7 in lauffähiger Form oder auf einem Datenträger nach Anspruch 15 sowie durch das Verfahren nach Anspruch 16 gelöst:

Der Spanraum der Stirnschneid wird durch ein Stirnspanraummodul erzeugt, das den Schleifvorgang des Stirnspanraums steuert. Entsprechend wird der Schleifvorgang des Umfangsspanraums durch ein Umfangsspanraummodul gesteuert. Erfindungsgemäß ist ein Eckenspanraummodul vorgesehen, der die Erzeugung des Eckenspanraums automatisch steuert. Das Schleifwerkzeug wird dabei auf einem krummlinigen Pfad geführt. Dieser Pfad wird zumindest aus vorgegebenen Randbedingungen erzeugt. Zu diesen zählen z.B. ein vorgegebenes Wirkprofil der Eckenschneidkante, ein glatter d.h. knickfreier Anschluss der Eckenschneidkante an die Stirnschneidkante und/oder die Umfangsschneidkante und/oder ein vorgegebener Eckenaxialspanwinkel oder ein vorgegebener Verlauf des Eckenaxialspanwinkels. Der Verlauf des Eckenaxialspanwinkels wird automatisch aus dem Axialwinkel des Stirnspanraums und dem Spiralspanwinkel erzeugt, indem eine Funktion festgelegt wird, mit der der Axialspanwinkel mit geringst möglicher Krümmung der erzeugten Fläche von der Stirnspanfläche auf die Umfangsspanfläche übergeleitet wird. Die Funktion kann analytisch oder in Form einer Tabelle vorgegeben sein. In letzterem Fall kann die Anpassung auf konkrete Axialwinkel des Stirnspanraums und Axialspanwinkel, Eckenradien und Werkzeugdurchmesser durch Skalierung erfolgen.

Die erfindungsgemäße Schleifeinrichtung gestattet, wie das Schleifprogramm und das Schleifverfahren, die Erzeugung von Zerspanungswerkzeugen mit vorgegebenem Wirkprofil sowie vorgegebenem Stirnaxialspanwinkel und Umfangsspanwinkel. (Der auch als Spiralwinkel oder Umfangsaxialspanwinkel bezeichnet wird.) Dies erfolgt mit einfachen Eingaben, die keinen Bediener wirklich überfordern können. Das Eckenspanraummodul erzeugt automatisch ein Eckenspanflächenprofil, das glatt an die benachbarten Spanräume anschließt und bei dem die Eckenschneidkante mit dem gewünschten Wirkprofil übereinstimmt, das einen eingegebenen und somit festgelegten Eckenradius aufweist. Die Spanflächen und deren Übergänge sind glatt und facettenfrei. Ebenso sind die Schneidkanten in ihrem gesamten Verlauf von der Stirnschneidkante bis zur Umfangsschneidkante knick- und eckenfrei. Der Stirnaxialspanwinkel und der Umfangsaxialspanwinkel können unabhängig voneinander festgelegt werden. Es entsteht eine Eckenschneidkante mit guter Standfestigkeit. Der Spanfluss ist durch die glatte Spanraumausbildung begünstigt.

Des Weiteren ist eine entsprechende Schleifmaschine einfach zu programmieren und es können kurze Bearbeitungszeiten erreicht werden. Dies insbesondere deshalb, weil die Eckenschneidkante, d.h. der Eckenspanraum in einem Zuge geschliffen wird. Mehrmalige Zustellung aus verschiedenen Winkel, wie sie früher hilfsweise versucht worden sind, sind nicht erforderlich. Im einfachsten Fall könnten die Stirnschneidkante, die Eckenschneidkante und die Umfangsschneidkante in einem Zuge geschliffen werden. Vorzugsweise werden jedoch der Stirnspanraum, der Eckenspanraum und der Umfangsspanraum in separaten Bewegungen der Schleifscheibe erzeugt, wobei die einzelnen Pfade im Wesentlichen tangentenstetig aneinander anschließen. Es werden dann der Stirnspanraum, der Eckenspanraum und der Umfangsspanraum nacheinander mit ein und demselben Schleifwerkzeug erzeugt. Auf diese Weise können besonders rationelle Bearbeitungsvorgänge erreicht werden.

Weitere Einzelheiten vorteilhafter Ausführungsformen der Erfindung ergeben sich aus der Zeichnung, der nachfolgenden Beschreibung oder aus Ansprüchen.

In der Zeichnung ist ein Beispiel der Erfindung veranschaulicht. Es zeigen:

Figur 1 ein mit dem erfindungsgemäßen Schleifverfahren bzw. der Schleifeinrichtung erzeugtes Zerspanungswerkzeug in vereinfachter ausschnittsweiser Seitenansicht,

Figur 2 das Wirkprofil des Zerspanungswerkzeugs nach Figur 1 im Bereich seiner Eckenschneidkante,

Figur 3 das Zerspanungswerkzeug nach Figur 1 in einer perspektivischen Ansicht mit Blick auf seine Stirnseite,

Figur 4 das Zerspanungswerkzeug nach Figur 1 und 3 in einer ausschnittsweisen Perspektivdarstellung mit Hauptblickrichtung in Radialrichtung in einem anderen Maßstab,

Figur 5 eine Schleifeinrichtung in aufs Äußerste schematisierter Darstellung,

Figur 6 ein Zerspanungswerkzeug und seine Koordinaten in aufs Äußerste schematisierter Darstellung und

Figur 7 eine Steuereinrichtung zur Steuerung der Schleifeinrichtung nach Figur 5 als Blockschaltbild.

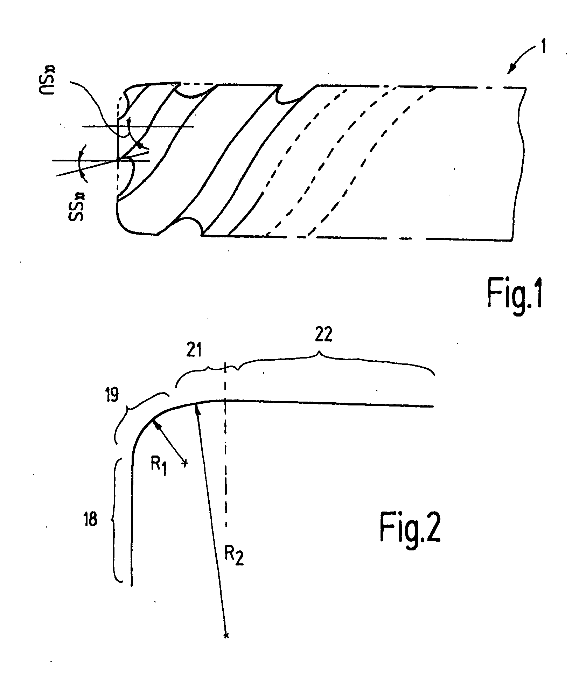

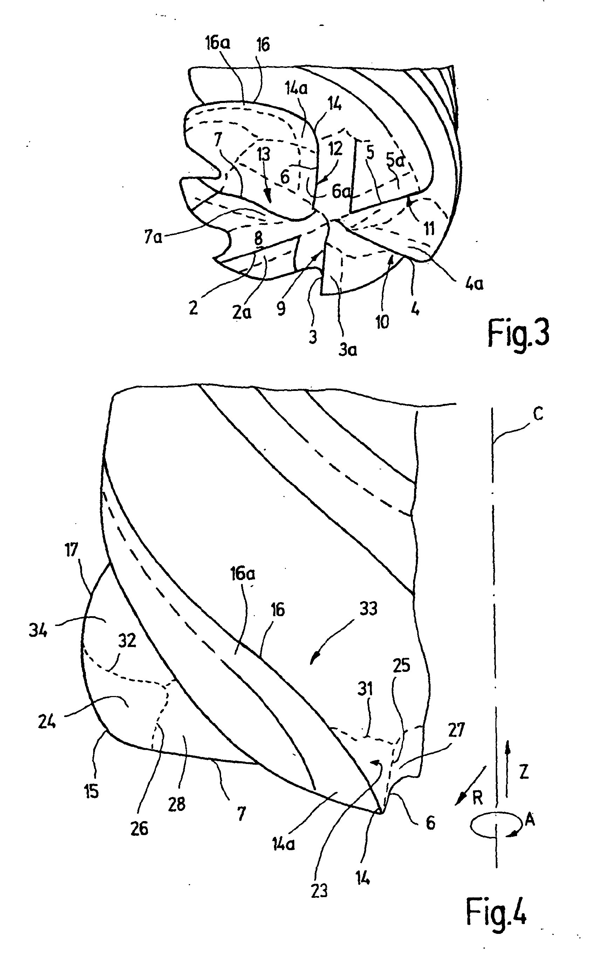

In Figur 1 ist ein Zerspanungswerkzeug 1 in Form eines Stirn-Eckfräsers veranschaulicht. Dieses Zerspanungswerkzeug geht auch aus den Figuren 3 und 4 hervor. Es weist Stirnschneidkanten 2, 3, 4, 5, 6, 7 auf, die im Wesentlichen radial orientiert und in einer gemeinsamen Ebene angeordnet sind, auf der die Drehachse C (Figur 4) senkrecht steht. An die Stirnschneidkanten 2 bis 7 schließen sich Stirnspanflächen an, die Stirnspanräume 8 bis 13 begrenzen. An den Stirnschneidkanten 2 bis 7 sind Spanwinkel (Axialspanwinkel $\alpha_{SS}$, siehe Figur 2) festgelegt, die z.B. 5° oder 10° zur Axialrichtung betragen. Im Übrigen können die Stirnschneidkanten 2 bis 7 und die Stirnspanräume 8 bis 13 im Wesentlichen gleich oder auch unterschiedlich ausgebildet sein. Es können z.B. auch zwei längere Stirnzähne und vier kürzere vorgesehen sein. Gleich ausgebildet sind auch die sich anschließenden Eckschneidkanten und Umfangsschneidkanten. Sie werden nachstehend exemplarisch anhand der aus Figur 4 ersichtlichen Stirnschneidkanten 6, 7, der sich anschließenden Eckenschneidkanten 14, 15 und der sich wiederum anschließenden Umfangsschneidkanten 16, 17 beschrieben.

Figur 2 veranschaulicht das Wirkprofil des Zerspanungswerkzeugs 1. Ein erster sich radial erstreckender Abschnitt 18 wird von den Stirnschneidkanten 2 bis 7 erzeugt. Das Wirkprofil weist dann einen bogenförmigen Abschnitt 19 mit dem Radius R1 auf, der von den Eckenschneidkanten 14, 15 sowie den weiteren nicht gesondert bezeichneten Eckenschneidkanten erzeugt wird. Im Weiteren kann das Wirkprofil mit einem Abschnitt 21 versehen sein, der einen größeren Radius R2 aufweist und sich glatt an den bogenförmigen Abschnitt 19 anschließt. Der Abschnitt 21 geht in einen Abschnitt 22 über, der in Figur 2 linear ist und somit eine Zylinderkontur beschreibt. Zumindest der Abschnitt 19 wird von den Eckenschneidkanten 14, 15 erzeugt während die Abschnitt 21, 22 von der Umfangsschneidkante 16 oder auch noch von Teilen der Eckenschneidkante 14, 15 erzeugt werden. Somit erstreckt sich die Eckenschneidkante in den Abschnitt 21 hinein. Es können, wie veranschaulicht, Eckenschneidkanten 14, 15 mit kreisbogenförmigem Wirkprofil oder auch anderen Wirkprofilen, beispielsweise elliptischen oder ähnlichen vorgesehen werden. Die Eckenschneidkanten 14, 15 grenzen an Spanflächen 23, 24, die auch als Konturspanflächen bezeichnet werden. Diese gehen bei in Figur 4 gestrichelt angedeuteten Linien 25, 26 in die Spanflächen 27, 28 über, die an die Stirnschneidkanten 6, 7 grenzen und deshalb auch als Stirnspanflächen bezeichnet werden. Die Linien 25, 26 markieren im Idealfall keine Kanten und insbesondere keine Absätze. Wenn an den Linien 25, 26 Kanten ausgebildet sind treffen sich an diesen die Konturspanflächen 23, 24 und die Stirnspanflächen 27, 28 in einem stumpfen Winkel, der z.B. im Bereich von 160° bis 180° liegt. Somit ist der Übergang zwischen den benachbarten Spanflächen jeweils im Wesentlichen glatt.

Die Umfangsschneidkanten 16, 17 grenzen an in Figur 4 gestrichelten Linien 31, 32 an Spanflächen 33, 34, die auch als Umfangsspanflächen bezeichnet werden. Die Linie 31, 32 stellen wiederum keine merkliche Kante und insbesondere keinen Absatz dar. Die benachbarten Spanflächen treffen sich hier vorzugsweise tangentenstetig oder unter einem stumpfen Winkel, der möglichst größer als 160° ist.

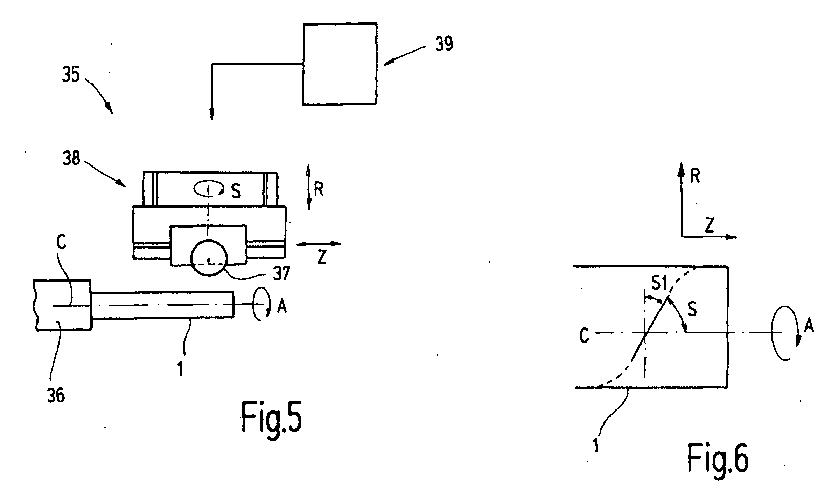

Der Axialspanwinkel ist an den Umfangsschneidkanten 16, 17 entsprechend dem aus Figur 6 ersichtlichen Spiralwinkel S deutlich größer als an der Stirnschneidkante 6 bzw. 7. Der Spiralwinkel S kann beispielsweise größer als 30° sein. Die in den Eckbereichen vorhandenen Spanflächen 23, 24 schaffen einen Übergang von dem geringen Axialspanwinkel an den Stirnschneidkanten 6, 7 zu dem großen Axialspanwinkel an den Umfangsschneidkanten 16, 17. Dabei sind die Spanflächen 23, 24 so gewölbt oder verwunden, dass die Stirnschneidkante 6 knickfrei und absatzlos in die Eckenschneidkante 14 übergeht, die wiederum knickfrei und absatzlos in die Umfangsschneidkante 16 übergeht. Gleiches gilt für die aus Figur 4 ersichtliche Kombination zwischen der Stirnschneidkante 7, der Eckenschneidkante 15 und der Umfangsschneidkante 17 sowie allen anderen Schneidkanten. Die Eckenschneidkante 14 bzw. 15 schließt somit tangentenstetig an die jeweils benachbarte Stirnschneidkante 6, 7 und die jeweils benachbarte Umfangsschneidkante 16, 17 an. Zugleich bestimmt sie das Wirkprofil gemäß Figur 2 in dem Abschnitt 19 mit dem festgelegten Radius R. Eine weitere Bedingung, die die Eckenschneidkante 14 bzw. 15 einhält, ist eine minimale Krümmung. Aus diesen genannten Bedingungen lässt sich das Profil der Eckenschneidkante 14 bzw. 15 eindeutig bestimmen. Damit ist auch die Wölbung der Profilspanfläche 23, 24 eindeutig festgelegt, zumindest wenn deren glatter Anschluss an die benachbarten Spanflächen 27, 28 bzw. 33, 34 berücksichtigt wird.

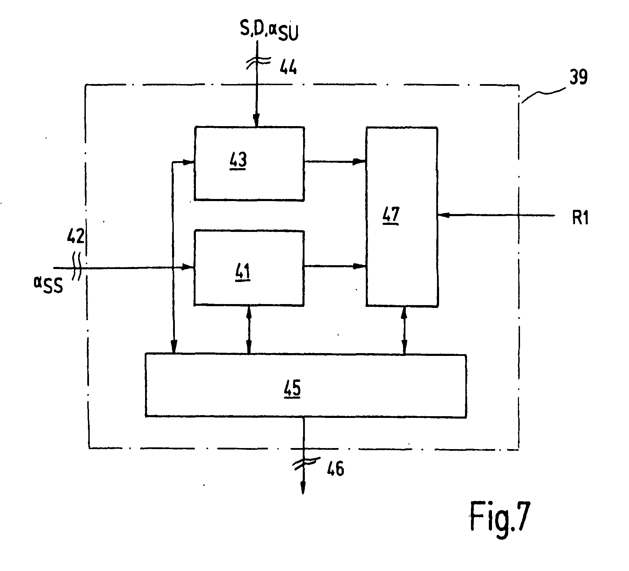

Zur Herstellung der insoweit beschriebenen Spanraum- und Schneidengeometrie dient eine in Figur 5 schematisch veranschaulichte Schleifeinrichtung 35. Zu dieser gehört eine Halte- oder Spanneinrichtung 36 zur Aufnahme des Zerspanungswerkzeugs 1 oder dessen Rohling. Vorzugsweise wird der Rohling bzw. das Zerspanungswerkzeug 1 um eine Achse C drehbar gehalten. Der entsprechende Drehwinkel wird mit A bezeichnet. Zu der Schleifeinrichtung 35 gehört ferner ein Schleifwerkzeug 37, beispielsweise in Gestalt einer Schleifscheibe, das drehend angetrieben ist. Der entsprechende Schleifkopf ist von einer Positioniereinrichtung 38 getragen, mit der der Schleifkopf und mit ihm das Schleifwerkzeug 37 in Radius- oder Radialrichtung R sowie in Längsrichtung Z verstellbar und zusätzlich um die Radialrichtung schwenkbar gelagert ist, um Spiralwinkel S einstellen zu können. Die Positioniereinrichtung 38 wird von einer Steuereinrichtung 39 gesteuert, die in Figur 5 lediglich schematisch angedeutet ist. Die Steuereinrichtung 39 ist vorzugsweise programmgesteuert. Teile des Steuerprogramms sind in Figur 7 schematisch veranschaulicht.

Die Steuereinrichtung 39 besteht aus einer Hardwarekomponente beispielsweise in Form eines Computers, der mit geeigneten Speichern sowie einer Ein- und Ausgabeeinrichtung kommuniziert und die Positioniereinrichtung 38 steuert. Figur 7 veranschaulicht Teile des auf der Steuereinrichtung 39 laufenden Programms. Dieses Programm enthält ein Stirnspanraummodul 41, das Daten enthält, die die Form der Stirnschneidkante (z.B. linear oder gekrümmt) und des sich anschließenden Stirnspanraums kennzeichnen. Die Daten können einer abgespeicherten Tabelle entnommen oder über eine Eingabeschnittstelle 42 eingegeben sein. Ein typisches Eingabedatum ist der Axialspanwinkel $\alpha_{SS}$ der Stirnschneidkante.

Des Weiteren enthält das Steuerprogramm ein Umfangsspanraummodul 43, das die zum Schleifen des Umfangsspanraums und der Umfangsschneidkante erforderlichen Steuerbefehle oder Signale anhand von eingegebenen oder abgespeicherten Daten erzeugt. Typische beispielsweise über eine Eingabeschnittstelle 44 einzugebende Daten sind der Spiralwinkel S, der Durchmesser D und/oder der Axialspanwinkel $\alpha_{SU}$ der Umfangsschneidkante. Die Module 41, 43 liefern ihre Daten auf Abruf an ein Koordinationsmodul 45, das über eine Ausgangsschnittstelle 46 die Positioniereinrichtung 38 direkt oder indirekt steuert.

Das Steuerprogramm (die Software) enthält außerdem ein Eckenspanraummodul 47 (das auch als Profilspanraummodul bezeichnet wird). Diese erhält Daten von dem Stirnspanraummodul 41 und dem Umfangsspanraummodul 43. Es kann außerdem auf einen nicht weiter veranschaulichten Speicher zugreifen, in dem logische Regeln für die Gestaltung des Übergangs zwischen dem Stirnspanraum und dem Umfangsspanraum oder typische Übergänge in Form von Tabellen abgelegt sind. Das Eckenspanraummodul 47 bestimmt beispielsweise aus dem Axialspanwinkel $\alpha_{SS}$ der Stirnschneidkante und dem Axialspanwinkel $\alpha_{SU}$ der Umfangsschneidkante einen Axialspanwinkelverlauf für die Eckenschneidkante (14 oder 15 sowie sonstige) und schließt die insoweit definierte Eckenspanfläche 23, 24 absatzlos an die benachbarten Spanflächen 27, 33 bzw. 28, 34 an. Daraus ermittelt das Eckenspanraummodul Steuerdaten oder Signale und übermittelt diese auf Anforderung an das Koordinationsmodul 45.

Das Eckenspanraummodul 47 ermittelt die erforderlichen Steuerdaten für die Schleifeinrichtung 35 beispielsweise in einer in Zylinderkoordinaten durchzuführenden Rechnung. In den Zylinderkoordinaten gemäß Figur 6 wird die Umfangskontur gemäß Figur 2 und 4 beispielsweise ausgedrückt durch die

Umfangskontur: R(z) (Radiuskoordinate R über Längskoordinate z) und

Radiale Position: A(z) (Polarwinkel A über Längskoordinate z).

Der Verlauf des Polarwinkels wird zweckmäßigerweise als Spiralwinkel S(z) in Abhängigkeit von der Längskoordinate z wie folgt beschrieben:

$$\tan S(z) = R(z)\frac{dA}{dz}\ .$$

Daraus folgt für den Polarwinkel:

$$A(z) = \int \frac{\tan S(z)}{R(z)}\,dz\ .$$

Aus dieser Gleichung kann durch Vorgabe des Spiralwinkels und des Radiuses bzw. Radiusverlaufs der Verlauf der Schneidkante errechnet werden. Dabei wird die Integrationskonstante so gewählt, dass der Endpunkt des Übergangsbereichs (maximale Z-Koordinate) der so definierten Schneidkante auf der Oberfläche des Umfangsspanraums liegt. Es wird somit ein nahtloser Übergang der Eckenschneidkante in die Umfangsschneidkante erreicht, wie sie durch den Umfangsspanraum festgelegt ist. Die Konturspanfläche ergibt sich zwangsläufig durch die Bewegung der Schleifscheibe entlang der so definierten Schneidkante. Die Schleifscheibe berührt dabei die Eckenschneidkante stirnseitig. Für etwaige verbleibende Freiheitsgrade werden durch Angabe eines Kernprofils sowie eines Spanwinkels an jedem Punkt der Schneide festgelegt. Die Festlegung kann jedoch, wie oben erwähnt und durch den beschriebenen Formalismus ausgedrückt, auch durch Interpolation der Lücke zwischen der Stirnspanfläche und der Umfangsspanfläche mit einer minimal gekrümmten Fläche erfolgen.

Die Schneidkante wird aus Spanraumfläche und Freifläche gebildet. Die insoweit beschriebene Erzeugung der kontinuierlichen, d.h. absatzlosen und knickfreien Schneidkante, die sich von der Stirnschneidkante 6 über die Eckenschneidkante 14 in die Umfangsschneidkante 16 hinein erstreckt, ermöglicht die einfache und elegante Erzeugung von Freiflächen an dem Zerspanungswerkzeug 1, ähnlich dem vorstehend beschriebenen Verfahren. Die Stirnfreiflächen sind in Figur 3 mit 2a bis 7a bezeichnet. Eine entsprechende Eckenfreifläche ist in Figur 3 in Gestalt der Eckenfreifläche 14a beispielhaft für alle anderen Eckenfreiflächen veranschaulicht. Beispielhaft für alle Umfangsfreiflächen steht die in Figur 3 und 4 veranschaulichte Umfangsfreifläche 16a. Die zu der Eckenspanfläche 23 gehörige Eckenfreifläche 14a schließt absatz- und vorzugsweise auch kantenlos an die benachbarten Freiflächen 6a, 16a an. Die Umfangsfreifläche wird beispielsweise mit einer gerundeten Kante der Schleifscheibe erzeugt. Sie grenzt an die Schneidkante und wird mit dem gewünschten Freiwinkel erzeugt. Die dazu erforderliche Voraussetzung des kontinuierlichen Schneidkantenverlaufs wird von der Schneidkante 6, 14, 16 erfüllt. Dies ist insbesondere an der Übergangsstelle zwischen der Eckenspanfläche und der Umfangsspanfläche sowie an der Übergangsstelle zwischen Stirnspanfläche und Eckenspanfläche sichergestellt.

Der Spiralwinkel beträgt im Stirnbereich, d.h. im Bereich der Stirnspanräume 8 bis 13 beispielsweise 10°. In dem Bereich der Eckenschneidkanten bzw. der Spanflächen 23, 24 steigt er kontinuierlich zu einem Wert an, der geringfügig geringer ist als der Spiralwinkel des Umfangsspanraums. Beträgt der Spiralwinkel in dem Umfangsspanraum 60° steigt der Spiralwinkel in den Eckenspanräumen beispielsweise auf 58° an. Dadurch wird erreicht, dass einerseits die Stabilität im Stirnbereich vorhanden ist und andererseits jegliche Ecke im Verlauf der Schneidkante an dem Übergangspunkt der beiden aus Figur 2 ersichtlichen Radien R1, R2 vermieden wird. An dem Ende der Konturspanfläche (Spanfläche 23) ist der Spiralwinkel deshalb etwas geringer als der Spiralwinkel des Umfangsspanraums, so dass die Konturspanfläche (Spanfläche 23) den Umfangsspanraum nicht hinterschneidet.

Der Verlauf des Spiralwinkels in Abhängigkeit von der Z-Koordinate kann für die Eckenspanfläche 23 über Tabellen beschrieben und abgespeichert sein. Alternativ oder zusätzlich ist es möglich, den Spanwinkel der Konturspanfläche (Spanfläche 23) über eine Funktion zu definieren. Diese kann krümmungsminimiert an die benachbarten Spanflächen anschließen. Zusätzlich oder alternativ kann die Möglichkeit vorgesehen werden, den Spanwinkel der Spanfläche 23 frei zu definieren. Dazu können beispielsweise entsprechende Eingabemittel, wie Eingabemasken, Eingabetabellen und dergleichen vorgesehen werden, in die die Spanwinkel in Abhängigkeit von der Z-Koordinate manuell eingetragen werden. Die Eingabefelder können von dem entsprechenden Eckenspanraummodul mit Wertvorschlägen gefüllt werden.

Mit dem vorgestellten Schleifverfahren und der Schleifeinrichtung lassen sich Fräswerkzeuge in bislang nicht bekannter Qualität mit insbesondere im Eckenbereich nicht facettierten Spanflächen und/oder nicht facettierten Freiflächen erzeugen. Insbesondere ist die Schneidkante von der Stirn bis zum Umfang knick- und eckenfrei. Zusätzlich haben solche Zerspanungswerkzeuge wegen der optimierten Eckengeometrie eine gute Standzeit.

Eine Schleifeinrichtung sowie ein entsprechendes Schleifverfahren beruht auf einem vorzugsweise als Programm oder Programmabschnitt ausgebildeten Modul, das die Geometrie der Eckenschneidkante und der Eckenspanfläche eines Zerspanungswerkzeugs anhand vorgegebener Randbedingungen vorzugsweise automatisch festlegt. Zu den vorgegebenen Randbedingungen können der Axialspanwinkel der Stirnschneidkante und der Axialspanwinkel der Umfangsschneidkante sowie ein gewünschtes Wirkprofil dienen. Weitere Randbedingungen können ein glatter Übergang der Spanflächen zwischen Stirnspanfläche, Eckenspanfläche und Umfangsspanfläche sein. Es werden Werkzeuge mit hoher Standzeit erhalten, mit denen sich zugleich eine gute Bearbeitungsqualität erreichen lässt.

**Patentansprüche**

1. Schleifeinrichtung (35) zum Schleifen von Zerspanungswerkzeugen (1),

   mit wenigstens einem Schleifwerkzeug (37), das mittels einer Positioniereinrichtung (38) in Bezug auf ein als Werkstück dienendes, zu schleifendes Zerspanungswerkzeug (1) verfahrbar ist, um in dem Zerspanungswerkzeug (1) Spanflächen (8, 23, 33) auszubilden oder zu bearbeiten,

   mit einer Steuereinrichtung (39) zur Steuerung der Positioniereinrichtung (38), wobei die Steuereinrichtung (39) :

a. ein Stirnspanraummodul (41), um das Schleifwerkzeug (37) zur Bearbeitung des vorgegebenen Stirnspanraums zu führen,

b. ein Umfangsspanraummodul (43), um das Schleifwerkzeug (37) zur Bearbeitung des vorgegebenen Umfangsspanraums zu führen, sowie

c. ein Eckenspanraummodul (47) enthält, das anhand der vorgegebenen Stirnschneidkante (8) und der vorgegebenen Umfangsschneidkante (16) eine Eckenspanfläche (23) bestimmt, und die Positioniereinrichtung (38) zur Erzeugung derselben mittels des Schleifwerkszeugs (37) entsprechend steuert, wobei

das Eckenspanraummodul (43) die Eckenspanfläche (23) anhand einer Eckenschneidkante (14) ermittelt, die glatt an die Stirnschneidkante (8) und die Umfangsschneidkante (16) anschließt, **dadurch gekennzeichnet, dass**

das Eckenspanraummodul (43) die Eckenschneidkante (14) als krümmungsminimale Verbindungskurve zwischen der Stirnschneidkante (8) und der Umfangsschneidkante (16) bestimmt.

2. Schleifeinrichtung nach Anspruch 1, **dadurch gekennzeichnet, dass** die Eckenspanfläche (23) glatt an die Stirnspanfläche anschließt.

3. Schleifeinrichtung nach Anspruch 1, **dadurch gekennzeichnet, dass** die Eckenspanfläche (23) glatt an die Umfangsspanfläche (33) anschließt.

4. Schleifeinrichtung nach Anspruch 1, **dadurch gekennzeichnet, dass** das Eckenspanraummodul (43) zur Bestimmung der Eckenschneidkante (14) als zusätzlichen Vorgäbeparameter ein vorgegebenes Wirkprofil (R1) der Eckenschneidkante (14) berücksichtigt.

5. Schleifeinrichtung nach Anspruch 1, **dadurch gekennzeichnet, dass** das Eckenspanraummodul (43) zur Bestimmung der Eckenspanfläche (23) als zusätzliche Vorgabeparameter vorgegebene Eckenspanwinkel berücksichtigt.

6. Schleifeinrichtung nach Anspruch 1, **dadurch gekennzeichnet, dass** das Eckenspanraummodul (43) Ansteuersignale für die Positioniereinrichtung (38) erzeugt, die das Schleifwerkzeug (37) im Übergang zu der Umfangsspanfläche (33) mit einem positiven spitzen Winkel zu dem Steigungswinkel (S1) der Umfangsspanfläche (33) führt, um die Erzeugung einer Hinterschneidung zu vermeiden.

7. Schleifprogramm zum Schleifen von Zerspanungswerkzeugen (1),
mittels wenigstens eines Schleifwerkzeugs (37), das mittels einer Positioniereinrichtung (38) in Bezug auf ein als Werkstück dienendes, zu schleifendes Zerspanungswerkzeug (1) verfahrbar ist, um in dem Zerspanungswerkzeug (1) Spanräume zu bearbeiten,
lauffähig auf einer Steuereinrichtung (39) zur Steuerung der Positioniereinrichtung (38), wobei das Schleifprogramm:

a. ein Stirnspanraummodul (41), um das Schleifwerkzeug (37) zur Bearbeitung des vorgegebenen Stirnspanraums zu führen,

b. ein Umfangsspanraummodul (43), um das Schleifwerkzeug (37) zur Bearbeitung des vorgegebenen Umfangsspanraums zu führen, sowie

c. ein Eckenspanraummodul (47) enthält, das anhand des vorgegebenen Stirnspanraums und des vorgegebenen Umfangsspanraums eine Eckenspanfläche (23) bestimmt und die Positioniereinrichtung (39) zur Erzeugung derselben mittels des Schleifwerkszeugs (37) entsprechend steuert, wobei

das Eckenspanraummodul (43) die Eckenspanfläche (23) anhand einer Eckenschneidkante (14) ermittelt, die glatt an die Stirnschneidkante (8) und die Umfangsschneidkante (16) anschließt **dadurch gekennzeichnet, dass**

das Eckenspanraummodul (43)
die Eckenschneidkante (14) als krümmungsminimale Verbindungskurve zwischen der Stirnschneidkante (8) und der Umfangsschneidkante (16) bestimmt.

8. Schleifprogramm nach Anspruch 7, **dadurch gekennzeichnet, dass** es die Eckenspanfläche (23) glatt an die Stirnspanfläche anschließen lässt.

9. Schleifprogramm nach Anspruch 7, **dadurch gekennzeichnet, dass** es die Eckenspanfläche (23) glatt an die Umfangspanfläche (33) anschließen lässt.

10. Schleifprogramm nach Anspruch 7, **dadurch gekennzeichnet, dass** das Eckenspanraummodul (43) zur Bestimmung der Eckenschneidkante (14) als zusätzlichen Vorgabeparameter ein vorgegebenes Wirkprofil (R1) der Eckenschneidkante (14) berücksichtigt.

11. Schleifprogramm nach Anspruch 7, **dadurch gekennzeichnet, dass** das Eckenspanraummodul (43) zur Bestimmung der Eckenspanfläche (23) als zusätzliche Vorgabeparameter vorgegebene Ek-

kenspanwinkel berücksichtigt.

12. Schleifprogramm nach Anspruch 7, **dadurch gekennzeichnet, dass** das Eckenspanraummodul (43) Ansteuersignale für die Positioniereinrichtung (38) erzeugt, die das Schleifwerkzeug (37) im Übergang zu der Umfangsspanfläche (33) mit einem positiven spitzen Winkel zu dem Steigungswinkel (S1) der Umfangsspanfläche (33) führt, um die Erzeugung einer Hinterschneidung zu vermeiden.

13. Schleifprogramm nach Anspruch 7, **dadurch gekennzeichnet, dass** das Eckenspanraummodul (43) mit einem Eingabemodul verbunden ist, mit dem Vorgabeparameter (Spanwinkel α) der Eckenspanfläche (23) eingebbar sind.

14. Schleifprogramm nach Anspruch 7, **dadurch gekennzeichnet, dass** das Eckenspanraummodul (43) mit einem Eingabemodul verbunden ist, mit dem Vorgabeparameter (R1) der Eckenschneidkante (14) eingebbar sind.

15. Datenträger mit einem Schleifprogramm nach Anspruch 7.

16. Verfahren zur Erzeugung oder Bearbeitung einer Spanraumgeometrie an einem Zerspanungswerkzeug (1), wobei

    a. Steuerdaten zur Erzeugung einer Stirnspanfläche und
    b. Steuerdaten zur Erzeugung einer Umfangsspanfläche vorgegeben sind,
    c. aus denen Steuerdaten zur Erzeugung einer Eckenspanfläche (23) bestimmt werden, die dann zur Positionierung eines Schleifwerkszeugs (37) dienen, wobei

        zur Bestimmung der Form der Eckenspanfläche (23) von dem Verlauf der Eckenschneidkante (14) ausgegangen wird, die glatt an die Stirnschneidkante (8) und die Umfangsschneidkante (16) anschließt,

**dadurch gekennzeichnet, dass**
die Eckenschneidkante (14) als krümmungsminimale Verbindungskurve zwischen der Stirnschneidkante (8) und der Umfangsschneidkante (16) bestimmt wird.

17. Verfahren nach Anspruch 17, **dadurch gekennzeichnet, dass** der Verlauf der Eckenschneidkante (14) nach Vorgabe des Wirkprofils R(z) der Eckenschneidkante (14) und nach Vorgabe des Spiralwinkels S(z) bestimmt wird, indem daraus der zugehörige Polarwinkel A(z) bestimmt wird.

## Claims

1. Grinding device (35) for grinding cutting tools (1), with at least one grinding tool (37), which can be moved by means of a positioning device (38) relative to a cutting tool (1) to be ground serving as a work piece, in order to configure or machine rake faces (8, 23, 33) in the cutting tool (1),
with a control means (39) for controlling the positioning device (38), wherein the control means (39) includes:

    a. a front chip space module (41) to guide the grinding tool (37) for machining the given front chip space,
    b. a peripheral chip space module (43) to guide the grinding tool (37) for machining the given peripheral chip space, and
    c. a corner chip space module (47), which determines a corner rake face (23) by way of the given front cutting edge (8) and the given peripheral cutting edge (16), and controls the positioning device (38) accordingly to generate the same by means of the grinding tool (37), wherein

the corner chip space module (43) determines the corner rake face (23) by way of a corner cutting edge (14), which smoothly adjoins the front cutting edge (8) and the peripheral cutting edge (16),
**characterised in that**
the corner chip space module (43) determines the corner cutting edge (14) as a joining curve of minimal curvature between the front cutting edge (8) and the peripheral cutting edge (16).

2. Grinding device according to Claim 1, **characterised in that** the corner rake face (23) smoothly adjoins the front rake face.

3. Grinding device according to Claim 1, **characterised in that** the corner rake face (23) smoothly adjoins the peripheral rake face (33).

4. Grinding device according to Claim 1, **characterised in that** the corner chip space module (43) takes into consideration a given work profile (R1) of the corner cutting edge (14) as additional given parameter for determination of the corner cutting edge (14).

5. Grinding device according to Claim 1, **characterised in that** the corner chip space module (43) takes into consideration given corner rake angles as additional given parameters for determination of the corner rake face (23).

6. Grinding device according to Claim 1, **characterised in that** the corner chip space module (43) generates activation signals for the positioning device (38), which in the transition to the peripheral rake face (33) guides the grinding tool (37) at a positive acute angle to the angle of slope (S1) of the peripheral rake face (33) to prevent generation of an undercut.

7. Grinding program for grinding cutting tools (1) by means of at least one grinding tool (37), which can be moved by means of a positioning device (38) relative to a cutting tool (1) to be ground serving as a work piece, in order to machine chip spaces in the cutting tool (1),
capable of running on a control means (39) for controlling the positioning device (38), wherein the grinding program includes:

a. a front chip space module (41) to guide the grinding tool (37) for machining the given front chip space,
b. a peripheral chip space module (43) to guide the grinding tool (37) for machining the given peripheral chip space, and
c. a corner chip space module (47), which determines a corner rake face (23) by way of the given front chip space and the given peripheral chip space, and controls the positioning device (39?) accordingly to generate the same by means of the grinding tool (37), wherein

the corner chip space module (43) determines the corner rake face (23) by way of a corner cutting edge (14), which smoothly adjoins the front cutting edge (8) and the peripheral cutting edge (16),
**characterised in that**
the corner chip space module (43) determines the corner cutting edge (14) as a joining curve of minimal curvature between the front cutting edge (8) and the peripheral cutting edge (16).

8. Grinding program according to Claim 7, **characterised in that** the corner rake face (23) smoothly adjoins the front rake face.

9. Grinding program according to Claim 7, **characterised in that** the corner rake face (23) smoothly adjoins the peripheral rake face (33).

10. Grinding program according to Claim 7, **characterised in that** the corner chip space module (43) takes into consideration a given work profile (R1) of the corner cutting edge (14) as additional given parameter for determination of the corner cutting edge (14).

11. Grinding program according to Claim 7, **characterised in that** the corner chip space module (43) takes into consideration given corner rake angles as additional given parameters for determination of the corner rake face (23).

12. Grinding program according to Claim 7, **characterised in that** the corner chip space module (43) generates activation signals for the positioning device (38), which in the transition to the peripheral rake face (33) guides the grinding tool (37) at a positive acute angle to the angle of slope (S1) of the peripheral rake face (33) to prevent generation of an undercut.

13. Grinding program according to Claim 7, **characterised in that** the corner chip space module (43) is connected to an input module, with which given parameters (rake angles α) of the corner rake face (23) can be input.

14. Grinding program according to Claim 7, **characterised in that** the corner chip space module (43) is connected to an input module, with which given parameters (R1) of the corner cutting edge (14) can be input.

15. Data carrier with a grinding program according to Claim 7.

16. Method for generating or machining a chip space geometry on a cutting tool (1), wherein

a. control data for generation of a front rake face and
b. control data for generation of a peripheral rake face are given,
c. from which control data are determined for generation of a corner rake face (23) are determined, which then serve to position a grinding tool (37),

wherein the course of the corner cutting edge (14); which smoothly adjoins the front cutting edge (8) and the peripheral cutting edge (16), is worked from to determine the shape of the corner rake face (23),
**characterised in that**
the corner cutting edge (14) is determined as a joining curve of minimal curvature between the front cutting edge (8) and the peripheral cutting edge (16).

17. Method according to Claim 17?, **characterised in that** the course of the corner cutting edge (14) is determined after pre-specification of the work profile R (z) of the corner cutting edge (14) and after pre-specification of the spiral angle S(z) by the associated polar angle A(z) being determined from it.

**Revendications**

1. Dispositif de rectification (35) pour la rectification d'outils à enlèvement de copeaux (1),
avec au moins un outil de rectification (37) qui, au moyen d'un dispositif de positionnement (38), est déplaçable par rapport à un outil à enlèvement de copeaux à rectifier (1) faisant fonction de pièce à tailler, afin de réaliser ou d'usiner des faces de coupe (8, 23, 33) dans l'outil à enlèvement de copeaux (1), avec un dispositif de commande (39) pour commander le dispositif de positionnement (38), le dispositif de commande (39) comprenant :

a. un module d'entredent frontal (41) afin de guider l'outil de rectification (37) pour usiner l'entredent frontal prédéfini,
b. un module d'entredent périphérique (43) afin de guider l'outil de rectification (37) pour usiner l'entredent périphérique prédéfini, et
c. un module d'entredent de pointe (47) qui détermine, à l'aide de l'arête de coupe frontale prédéfinie (8) et de l'arête de coupe périphérique prédéfinie (16), une face de coupe de pointe (23) et qui commande en conséquence le dispositif de positionnement (38) pour réaliser celle-ci au moyen de l'outil de rectification (37), le module d'entredent de pointe (43) déterminant la face de coupe de pointe (23) à l'aide d'une arête de coupe de pointe (14) qui se raccorde sans décrochement à l'arête de coupe frontale (8) et à l'arête de coupe périphérique (16),

**caractérisé en ce que**
le module d'entredent de pointe (43) détermine l'arête de coupe de pointe (14) en tant que courbe de raccordement à courbure minimale entre l'arête de coupe frontale (8) et l'arête de coupe périphérique (16).

2. Dispositif de rectification selon la revendication 1, **caractérisé en ce que** la face de coupe de pointe (23) se raccorde sans décrochement à la face de coupe frontale.

3. Dispositif de rectification selon la revendication 1, **caractérisé en ce que** la face de coupe de pointe (23) se raccorde sans décrochement à la face de coupe périphérique (33).

4. Dispositif de rectification selon la revendication 1, **caractérisé en ce que**, pour déterminer l'arête de coupe de pointe (14), le module d'entredent de pointe (43) prend en compte comme paramètre de consigne supplémentaire un profil effectif prédéfini (R1) de l'arête de coupe de pointe (14).

5. Dispositif de rectification selon la revendication 1, **caractérisé en ce que**, pour déterminer la face de coupe de pointe (23), le module d'entredent de pointe (43) prend en compte des angles d'attaque de pointe prédéfinis comme paramètres de consigne supplémentaires.

6. Dispositif de rectification selon la revendication 1, **caractérisé en ce que** le module d'entredent de pointe (43) produit des signaux de commande pour le dispositif de positionnement (38) qui, au niveau de la transition avec la face de coupe périphérique (33), guide l'outil de rectification (37) avec un angle aigu positif par rapport à l'angle de pas (S1) de la face de coupe périphérique (33) afin d'éviter la formation d'une contre-dépouille.

7. Programme de rectification pour rectifier des outils à enlèvement de copeaux (1), au moyen d'au moins un outil de rectification (37) qui, au moyen d'un dispositif de positionnement (38), est déplaçable par rapport à un outil à enlèvement de copeaux à rectifier (1) faisant fonction de pièce à tailler afin d'usiner des entredents dans l'outil à enlèvement de copeaux (1), exécutable sur un dispositif de commande (39) pour commander le dispositif de positionnement (38), le programme de rectification comprenant:

a. un module d'entredent frontal (41) afin de guider l'outil de rectification (37) pour usiner l'entredent frontal prédéfini,
b. un module d'entredent périphérique (43) afin de guider l'outil de rectification (37) pour usiner l'entredent périphérique prédéfini, et
c. un module d'entredent de pointe (47) qui détermine, à l'aide de l'entredent frontal prédéfini et de l'entredent périphérique prédéfini, une face de coupe de pointe (23) et qui commande en conséquence le dispositif de positionnement (39) pour réaliser celle-ci au moyen de l'outil de rectification (37), le module d'entredent de pointe (43) déterminant la face de coupe de pointe (23) à l'aide d'une arête de coupe de pointe (14) qui se raccorde sans décrochement à l'arête de coupe frontale (8) et à l'arête de coupe périphérique (16),

**caractérisé en ce que**
le module d'entredent de pointe (43) détermine l'arête de coupe de pointe (14) en tant que courbe de raccordement à courbure minimale entre l'arête de coupe frontale (8) et l'arête de coupe périphérique (1.6).

8. Programme de rectification selon la revendication 7, **caractérisé en ce qu'**il permet de raccorder la face de coupe de pointe (23) à la face de coupe frontale sans décrochement.

9. Programme de rectification selon la revendication 7, **caractérisé en ce qu'**il permet de raccorder la face de coupe de pointe (23) à la face de coupe périphérique (33) sans décrochement.

**10.** Programme de rectification selon la revendication 7, **caractérisé en ce que**, pour déterminer l'arête de coupe de pointe (14), le module d'entredent de pointe (43) prend en compte comme paramètre de consigne supplémentaire un profil effectif prédéfini (R1) de l'arête de coupe de pointe (14).

**11.** Programme de rectification selon la revendication 7, **caractérisé en ce que**, pour déterminer la face de coupe de pointe (23), le module d'entredent de pointe (43) prend en compte des angles d'attaque de pointe prédéfinis comme paramètres de consigne supplémentaires.

**12.** Programme de rectification selon la revendication 7, **caractérisé en ce que** le module d'entredént de pointe (43) produit des signaux de commande pour le dispositif de positionnement (38) qui, au niveau de la transition avec la face de coupe périphérique (33), guide l'outil de rectification (37) avec un angle aigu positif par rapport à l'angle de pas (S1) de la face de coupe périphérique (33) afin d'éviter la formation d'une contre-dépouille.

**13.** Programme de rectification selon la revendication 7, **caractérisé en ce que** le module d'entredent de pointe (43) est connecté à un module d'entrée qui permet d'entrer des paramètres de consigne (angle d'attaque α) de la face de coupe de pointe (23).

**14.** Programme de rectification selon la revendication 7, **caractérisé en ce que** le module d'entredent de pointe (43) est connecté à un module d'entrée qui permet d'entrer des paramètres de consigne (R1) de l'arête de coupe de pointe (14).

**15.** Support de données avec un programme de rectification selon la revendication 7.

**16.** Procédé pour réaliser ou usiner une géométrie d'entredent sur un outil à enlèvement de copeaux (1) en prédéfinissant

a. des données de commande pour réaliser une face de coupe frontale et
b. des données de commande pour réaliser une face de coupe périphérique,
c. dont sont déduites des données de commande pour réaliser une face de coupe de pointe (23), lesquelles servent ensuite au positionnement d'un outil de rectification (37), la forme de la face de coupe de pointe (23) étant déterminée à partir du profil de l'arête de coupe de pointe (14), laquelle se raccordé sans décrochement à l'arête de coupe frontale (8) et à l'arête de coupe périphérique (16),

**caractérisé en ce que**

l'arête de coupe de pointe (14) est déterminée en tant que courbe de raccordement à courbure minimale entre l'arête de coupe frontale (8) et l'arête de coupe périphérique (16).

**17.** Procédé selon la revendication 17, **caractérisé en ce que** le profil de l'arête de coupe de pointe (14) est déterminé selon la prescription du profil effectif R(z) de l'arête de coupe de pointe (14) et selon la prescription de l'angle d'hélice S(z), à partir desquels est déterminé l'angle polaire associé A(z).

Fig.1

Fig.2

Fig.3

Fig.4

Fig.5

Fig.6

S,D,α$_{SU}$

44

43

47 ← R1

42

α$_{SS}$

41

45

46

39

Fig.7

EP 1 577 055 B1

**EP 1 577 055 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5662514 A

- JP 60044260 A